# EUROPEAN PATENT APPLICATION

(11) **EP 4 501 689 A1**
(43) Date of publication of application: **05.02.2025**
(21) Application number: 23188818.1
(22) Date of filing: 31.07.2023
(51) Int. Cl.: B60L 15/20, B60R 25/00

(54) **SYSTEM AND METHOD FOR POWER MANAGEMENT OF A VEHICLE**

(71) Applicant: Ford Global Technologies, LLC, Dearborn, MI 48126 (US)
(72) Inventor: RICHARDSON, Rob Anthony, Chelmsford, CM2 8RG (GB); SOE, Kyaw Kyaw, Hintlesham, IP8 3NH (GB); FRY, Malcolm, Hertford, SG13 8AT (GB); SALTER, Stuart, White Lake, 48386 (US); ANSBACHER, Todd, Westland, 48185 (US)
(74) Representative: Haley Guiliano International LLP

(57) **Abstract**

The present disclosure relates to a system and method for power management of a vehicle. The system comprises an interface and a power management unit. The interface transmits one or more signals. The power management unit is communicatively coupled to the interface to receive the one or more signals. The power management unit processes one or more signals to control a run-lock mode. The run-lock mode includes selective power management of one or more components of the vehicle to maximize range and power take-off duration.

## Description

### Background

The present disclosure relates to methods and systems for power management. Particularly, but not exclusively, the present disclosure relates to a system and method for power management of a vehicle.

### Summary

The primary function of vehicles is not limited to a driving cycle. The vehicles can act as a power source in certain situations. Both conventional and battery electric vehicles (BEVs) can supply mechanical or electrical power to a peripheral component, e.g., while remaining stationary. Such power take-off capability of vehicles can be beneficial in a consumer and/or commercial setting. In one approach, the vehicles need to be manually turned "ON" or "OFF" based on a power requirement of a peripheral component, which may be provided by an automotive manufacturer or a third party. In another approach, a vehicle key must be left inside the vehicle, e.g., in the ignition of the vehicle, to allow power to be supplied to the peripheral component. As such, a run-lock feature may be beneficial in certain circumstances. For example, a run-lock feature allows secure, unattended engine operation, preventing the vehicle from being driven without authorization. However, this solution requires the vehicle to be in "ON" state, e.g., where the vehicle may be operated and/or driven without consent. In some examples, the vehicle may automatically shut down based on a preset time or condition to prevent unauthorized use. This, however, may then prevent powering of a peripheral component. A need, therefore, exists to provide enhanced systems and methods for managing power delivery to peripheral devices.

An object of the present disclosure is to provide enhanced systems and methods for power management of a vehicle, e.g., to maximize range and power take-off duration.

Another object of the present disclosure is to provide an enhanced and customizable run-lock mode.

Another object of the disclosure is to remotely or externally control the vehicle operation during the run-lock mode.

Another object of the present disclosure is to provide efficient power management of auxiliary or primary components of the vehicle and/or a peripheral device connected to the vehicle during the run-lock mode.

Another object of the present disclosure is to provide efficient and reliable solution for operating a vehicle fleet, e.g., in a commercial setting.

According to the systems and methods described herein, there is provided a system for power management of a vehicle. The system comprises an interface and a power management unit. The interface transmits one or more signals. The power management unit is communicatively coupled to the interface to receive the one or more signals. The power management unit processes the one or more signals to control a run-lock mode. The run-lock mode includes selective power management of one or more components of the vehicle. In the context of the present disclosure the term "component of the vehicle" or "vehicle component" is to be understood as an integral component of the vehicle, such as a power socket fixed in a cargo area of a vehicle, or a peripheral component of the vehicle, such as a tool or other device, fixed to other otherwise connectable to the vehicle. In some examples, the peripheral component may be a device provided by a manufacture of the vehicle or a by a third party. For the avoidance of doubt, the systems and methods described herein are intended for use with an automatic shut-off feature of a vehicle, e.g., a shut-off feature that controls the timeframe beyond which a vehicle, e.g., a vehicle engine, cannot be left running unattended. The systems and methods described herein are not intended to provide a default override of any such shut-off feature. For example, the power management unit may be configured to enable an enhanced run-lock that functions within, e.g., only within, the above stated timeframe, e.g., either alone or by cooperating with one or more other vehicle systems.

In some examples, the power management unit processes the signals to control the run-lock mode including enabling, pausing or disabling the run-lock mode.

In some examples, the power management unit processes the signal to decode one or more selected components and associated activation or deactivation status to control the run-lock mode.

In some examples, the interface is a human-machine interface to receive and convert one or more user inputs into the one or more signals.

In some examples, the interface is communicatively coupled to a sensor unit to determine one or more parameters associated with the vehicle state to generate one or more signals, enabling the automatic operation of the vehicle.

In some examples, the power management unit is communicatively coupled to the interface via at least one of a wired or wireless communication protocols.

In some examples, the power management unit includes an authentication unit to validate the one or more signals to allow secure vehicle operation.

In some examples, the human-machine interface enables selection of the one or more components of the vehicle from a predefined list. As a result, enabling the users to control the overall power distribution of the vehicle.

In some examples, the predefined list of one or more components of the vehicle includes auxiliary components, primary components or a combination thereof.

In some examples, the auxiliary components include lighting components, wiper and washer components, door lock components, infotainment components, heating, ventilation, and air conditioning (HVAC) components, electric window components, parking assistance components, power take-off (PTO) components or a combination thereof.

In some examples, the primary components include powertrain components, brake components, steering components, or a combination thereof.

According to the systems and methods described herein, there is provided a method for power management of a vehicle. The method comprises the steps of a) receiving one or more signals; b) processing the one or more signals to control a run-lock mode; and wherein the run-lock mode includes selective power management of one or more components of the vehicle.

In some examples, controlling the run-lock mode includes enabling or disabling the run-lock mode.

In some examples, the processing of the one or more signals comprises decoding the one or more selected components and associated activation or deactivation status to control the run-lock mode.

In some examples, the processing further comprises validating the one or more signals, e.g., to validate a user input or desire to set the run-lock mode.

According to the systems and methods described herein, an input is received to initiate a first power mode of a power management system of a vehicle, e.g., in response to receiving a signal from an interface of the vehicle, from a vehicle fleet server, and/or from a vehicle key. The first power mode may be a mode in which a vehicle is in a powered down state that inhibits control of a motor of the vehicle and/or access to the vehicle (e.g., a run-lock mode). In response to receiving the input to initiate the first power mode, a power management control module, e.g., power management unit, is activated, the power management control module being configured to receive a signal from a vehicle component, e.g., in response to the vehicle component being operationally connected to the vehicle and/or the vehicle component receiving a request for usage. In response to the power management control module receiving the signal from the vehicle component, the power management control module initiates a second power mode is which one or more vehicle systems are activated to enable power to be supplied the vehicle component while maintaining inhibition of the control of the motor of the vehicle and/or access to the vehicle.

The systems and methods for power management of a vehicle allows the users to enable or disable run-lock mode and select the one or more components of the vehicle, to be powered, locally or remotely. The components are enabled or disabled for conserving the power of the vehicle depending upon the selection of the one or more components. The remote interaction flexibility enhances the user's overall experience and reduces manual effort.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 illustrates a system for power management of a vehicle, in accordance with some examples of the present disclosure;
FIG. 2 illustrates a system equipped within a vehicle, in accordance with some examples of the present disclosure;
FIG. 3 illustrates a power management unit, in accordance with some examples of the present disclosure;
FIG. 4 illustrates an interface, in accordance with some examples of the present disclosure;
FIG. 5 illustrates an application interface installed on a peripheral device, in accordance with some examples of the present disclosure;
FIG. 6 illustrates a system for power management of a vehicle, in accordance with some examples of the present disclosure; and
FIG. 7 illustrates a method for power management of a vehicle in accordance with some examples of the present disclosure.

### Detailed Description

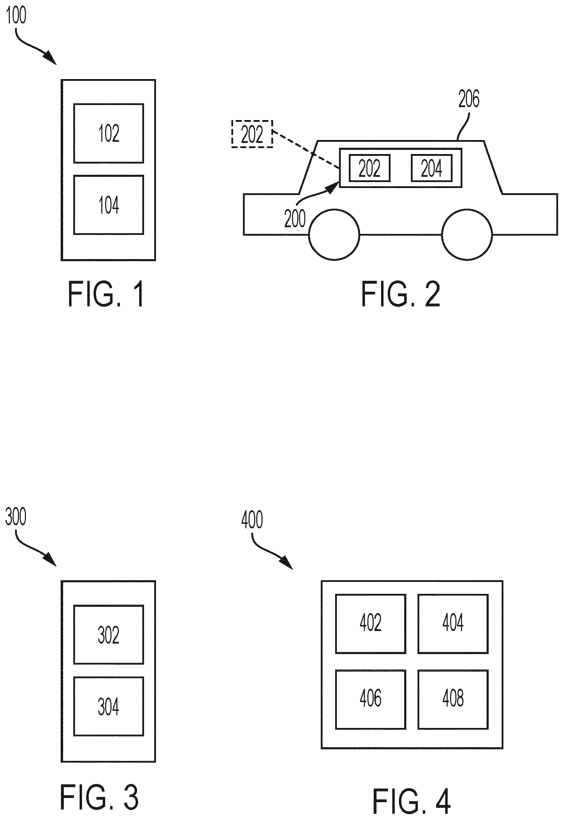

FIG. 1 illustrates a system 100 for power management of a vehicle. The system 100 comprises an interface 102, and a power management unit 104. The interface 102 may comprise at least one of a vehicle key, an infotainment system, a push button, an application installed on a peripheral device or a combination thereof.

The interface 102 is a human-machine interface configured to receive and convert one or more user inputs into one or more signals. Further, the one or more user inputs are converted into one or more signals using protocols. The protocols may include but are not limited to encoding, encryption, hashing, or obfuscation. The one or more signals are encoded for secure transmission operation.

The interface 102 may include but is not limited to an encoder, an interleaver or a modulator to perform various operations on the one or more user inputs before transmission. The various operations may include but are not limited to encoding, interleaving, or modulation. The interface 102 may comprise a processor, a memory and any storage media to execute and store information and instructions to carry out the overall operation of the vehicle.

The human-machine interface enables the user to select one or more components from the predefined list stored in the memory. The predefined list of one or more components of the vehicle includes auxiliary components, primary components or a combination thereof.

The auxiliary components may include lighting components, wiper and washer components, door lock components, infotainment components, heating, ventilation, and air conditioning (HVAC) components, electric window components, parking assistance components, power take-off (PTO) components or a combination thereof. The power take-off components may include peripheral devices but are not limited to a cherry picker, a crane lift, or a power tool utilizing vehicle power during power take-off operation. The primary components may include powertrain components, brake components, steering components, or a combination thereof.

The interface 102 is configured to transmit one or more signals to the power management unit 104 via at least one of a wired or wireless communication protocol. The at least one wired communication protocol may include but is not limited to an ethernet (IEEE 802.3), a local interconnect network (LIN), a controller area network (CAN), a media-oriented system transport (MOST), or a flexray. The at least one wireless communication protocol may include but is not limited to radio frequency (RF), infrared (IrDA), bluetooth, zigbee (and other variants of the IEEE 802.15 protocol), a wireless fidelity WiFI or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication.

The power management unit 104 is configured to receive the one or more signals from the interface 102. The power management unit 104 may be an integral part of the engine control unit (ECU). The power management unit 104 may comprise a processor and a memory to execute and store information and instructions.

The power management unit 104 processes the one or more signals to control run-lock mode. The power management unit 104 may validate the one or more received signals before processing the one or more signals. The power management unit 104 may perform reverse operations (decoding, deinterleaving, or demodulation) on the one or more signals carried out during transmission. The power management unit 104 may include but is not limited to a decoder, an interleaver or a demodulator. The power management unit 104 processes the one or more signals to control the run-lock mode including enabling or disabling the run-lock mode. The power management unit 104 processes the one or more signals to decode the one or more selected components and associated activation or deactivation status to control the run-lock mode. The run-lock mode includes selective power management of one or more components of the vehicle.

The selective power management of the one or more components of the vehicle is equivalent to priming the vehicle to activate or power the essential components during run-lock mode and power take-off operations. Further, activation status indicates the power of the particular component is "ON", and deactivation status indicates the power of the particular component is "OFF". For example, if the user is working at the rear side of the vehicle, then the user requires only the essential components such as lightning components and the HVAC components to be powered. The remaining components can be turned off to conserve the power of the vehicle. The interface 102 provides flexibility to the user for selecting the desired components to be powered.

The system 100 operates in different configurations to carry out the overall operations. In a first configuration, the interface 102 may comprise at least one of a vehicle key, push button or a combination thereof to perform the functionality of the run-lock enabling or disabling. The interface 102 further may comprise at least one of an infotainment system of the vehicle or an application installed on a third-party device to perform the functionality of the component selections.

For example, the user may utilize the vehicle key to enable or disable the run-lock mode and the infotainment system to select desired one or more components from the predefined list to be powered on during the run-lock mode. The interface 102 receives inputs from the vehicle key and the infotainment system of the vehicle and converts the inputs into one or more signals. Further, the interface 102 transmits the one or more signals to the power management unit 104. The power management unit 104 processes the one or more signals to control a run-lock mode. The power management unit 104 processes the signal to decode one or more selected components and associated activation or deactivation status to control the run-lock mode. This results in selective power management of the one or more components of the vehicle to conserve power.

In an alternative configuration, the interface 102 may comprise at least one of an infotainment system of the vehicle or an application installed on a third-party device to perform the functionality of both the run-lock enabling or disabling and the component selections.

For example, the user may utilize the infotainment system to enable or disable the run-lock mode and to select desired one or more components from the predefined list to be powered on during the run-lock mode. The interface 102 receives inputs from the infotainment system of the vehicle and converts the inputs into one or more signals. Further, the interface 102 transmits the one or more signals to the power management unit 104. The power management unit 104 processes the one or more signals to control a run-lock mode. The power management unit 104 processes the signal to decode one or more selected components and associated activation or deactivation status to control the run-lock mode. This results in selective power management of the one or more components of the vehicle to conserve power.

FIG. 2 illustrates a system 200 equipped within a vehicle 206. The system 200 comprises an interface 202, and a power management unit 204. The interface 202 is an integral part of the system 200 equipped within the vehicle 206.

Alternatively, the interface 202 may be a separate unit located remotely from the vehicle 206.

The interface 202 may comprise at least one of a vehicle key, a push button, an infotainment system of the vehicle, an application installed on a third-party device or a combination thereof.

The interface 202 is a human-machine interface to receive and convert one or more user inputs into one or more signals. Further, the one or more user inputs are converted into one or more signals using protocols. The protocols may include but are not limited to encoding, encryption, hashing, or obfuscation. The one or more signals are encoded for secure transmission operation.

The interface 202 may include but is not limited to an encoder, an interleaver or a modulator to perform various operations on the one or more user inputs before transmission. The various operations may include but are not limited to encoding, interleaving, or modulation. The interface 202 may comprise a processor, a memory and any storage media to execute and store information and instructions to carry out an overall operation of the vehicle.

The human-machine interface enables the user to select one or more components from the predefined list stored in the memory. The predefined list of one or more components of the vehicle includes auxiliary components, primary components or a combination thereof. The auxiliary components may include lighting components, wiper and washer components, door lock components, infotainment components, heating, ventilation, and air conditioning (HVAC) components, electric window components, parking assistance components, power take-off (PTO) components or a combination thereof. The power take-off components may include peripheral devices but are not limited to a cherry picker, a crane lift, or a power tool utilizing vehicle power during power take-off operation. The primary components may include powertrain components, brake components, steering components, or a combination thereof.

The interface 202 may further include but is not limited to a tactile sensor, a light-emitting diode (LED), a loudspeaker or a combination thereof to receive and provide feedback from the power management unit 204.

The interface 202 is configured to transmit one or more signals to the power management unit 204 via at least one of a wired or wireless communication protocol. The at least one wired communication protocol may include but is not limited to an ethernet (IEEE 802.3), a local interconnect network (LIN), a controller area network (CAN), a media-oriented system transport (MOST), or a flexray. The at least one wireless communication protocol may include but is not limited to radio frequency (RF), infrared (IrDA), bluetooth, zigbee (and other variants of the IEEE 802.15 protocol), a wireless fidelity WiFI or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication.

The power management unit 204 is configured to receive the one or more signals. The power management unit 204 may be an integral part of the engine control unit (ECU). The power management unit 204 may comprise a processor and a memory to execute and store information and instructions.

The power management unit 204 may comprise an authentication unit (not shown). The authentication unit performs validation on the one or more signals. The power management unit 204 only processes the one or more signals if the authentication unit validates the one or more signals. The power management unit 104 sends back an error signal to the interface 202 if the authentication unit fails to validate the one or more signals. The error signal may include an SMS, tactile feedback, a light-emitting diode (LED) blinking, an audio message, or a combination thereof.

The power management unit 204 processes the one or more signals after validation to control run-lock mode. The power management unit 204 may perform reverse operations (decoding, deinterleaving, or demodulation) on the one or more signals carried out during transmission. The power management unit 204 may include but is not limited to a decoder, an interleaver or a demodulator. The power management unit 204 processes the one or more signals to control the run-lock mode including enabling or disabling the run-lock mode. The power management unit 204 processes the one or more signals to decode the one or more selected components and associated activation or deactivation status to control the run-lock mode. The run-lock mode includes selective power management of one or more components of the vehicle.

For example, the user may utilize the application installed on the third-party device located remotely from the vehicle 206 i.e. from a cherry picker as power take-off component. The application allows the user to enable or disable the run-lock mode and to select desired one or more components from a predefined list to be powered on during the run-lock mode. The interface 202 receives user inputs from the application installed on the third-party device and converts the inputs into one or more signals. Further, the interface 202 transmits the one or more signals to the power management unit 204. The power management unit 204 processes the one or more signals to control a run-lock mode. The power management unit 204 processes the signal to decode one or more selected components and associated activation or deactivation status to control the run-lock mode. This results in selective power management of the one or more components of the vehicle to conserve power.

FIG. 3 illustrates a power management unit 300. The power management unit 300 comprises at least one processing unit 302 and at least one memory 304.

The at least one processing unit 302 may comprise at least one or more processors to carry out the overall operation of the system. The at least one processing unit 302 is capable of executing software instructions or algorithms to implement functional aspects of the present disclosure. The at least one processing unit 302 can be any commercially available processor or a cloud system that can process the data received from the interface. The at least one processing unit 302 can also be implemented as a Digital Signal Processor (DSP), a microcontroller, a designated System on Chip (SoC), an integrated circuit implemented with a Field Programmable Gate Array (FPGA), an Application Specific Integrated Circuit (ASIC), or a combination thereof. The at least one processing unit 302 can be implemented using a coprocessor for complex computational tasks.

The at least one memory 304 is coupled with the at least one processing unit 302 and stores the machine-learning algorithms and instructions. The at least one memory 304 stores the predefined list of one more component of the vehicle. The at least one memory 304 also stores a table indicating a predefined threshold for one or more components of the vehicle. The at least one memory 304 may include any of the volatile memory elements (for example, random access memory, such as DRAM, SRAM, SDRAM, etc.), non-volatile memory elements (for example, ROM, hard drive, etc.), other storage media or combinations thereof. The at least one memory 304 may have a distributed architecture, where various components are situated remotely from one another but can be accessed by the at least one processing unit 302. The software in at least one memory 304 can include one or more software programs, and machine learning algorithms, each of which includes an ordered listing of executable instructions for implementing logical functions. Further, the at least one processing unit 302 can be implemented using a cloud architecture. The at least one processing unit 302 can interact with one or more components of the vehicle for selective power management.

FIG. 4 illustrates an interface 400. The interface 400 comprises a vehicle key 402, an infotainment system 404, a push button 406, and a smart vehicle key 408.

The vehicle key 402 is an original key used to manually lock or unlock the vehicle and to enable the run-lock mode of the vehicle.

The infotainment system 404 of the vehicle may comprise at least one touch screen, at least one button or a combination thereof. The infotainment system 404 allows the user to select desired one or more components of the vehicle via at least one touch screen, at least one button or a combination thereof.

The push button 406 is a simple switch used to control the run-lock mode of the vehicle. The run-lock mode is activated by pressing the push button 406. Deactivating the run-lock mode involves pushing the push button 406 back to its initial position. The push button 406 may be fixed on the vehicle. Alternatively, the push button 406 is integrated into the vehicle key. Alternatively, the push button 406 is a touch button integrated into the infotainment system 404.

The smart vehicle key 408 is a passive keyless entry to automatically unlock the vehicle when the user is in proximity to the vehicle.

Alternatively, the smart vehicle key 408 may include a smart card, a digital key, or an application installed on a third-party device.

The smart vehicle key 408 may use near-field communication (NFC), bluetooth low energy (BLE) or ultra-wideband (UWB) protocols to securely access the vehicle.

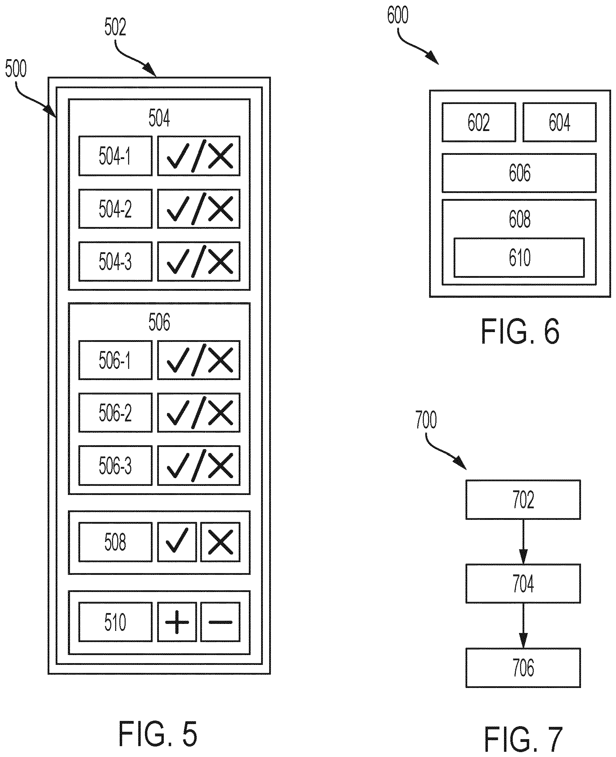

FIG. 5 illustrates an application interface 500 installed on a third-party device 502. The third-party device 502 may include but is not limited to a smartphone, laptop, or a display wirelessly connected to the vehicle.

The application interface 500 includes an auxiliary component selection unit 504, a primary component selection unit 506, a locking or unlocking selection unit 508 and a customization unit 510.

The auxiliary component selection unit 504 comprises multiple auxiliary components (504-1, 504-2, and 504-3) and selecting or rejecting options. The auxiliary component selection unit 504 allows selection of the one or more auxiliary components (504-1, 504-2, and 504-3) of the vehicle from a predefined list. The one or more auxiliary components (504-1, 504-2, and 504-3) may include lighting components, wiper and washer components, door lock components, infotainment components, heating, ventilation, and air conditioning (HVAC) components, electric window components, parking assistance components, power take-off (PTO) components or a combination thereof.

The primary component selection unit 506 comprises multiple primary components (506-1, 506-2, and 506-3) and selecting or rejecting options. The primary component selection unit 506 allows selection of the one or more primary components (506-1, 506-2, and 506-3) of the vehicle from a predefined list. The one or more primary components (506-1, 506-2, and 506-3) may include powertrain components, brake components, steering components, or a combination thereof.

The locking or unlocking selection unit 508 enables the wireless locking or unlocking of the vehicle using locking or unlocking options.

The customization unit 510 allows the user to add or remove the auxiliary and primary components from the predefined list using addition or deletion options.

FIG. 6 illustrates a system 600 for power management of a vehicle in accordance with an example of the present disclosure. The system 600 comprises an interface 602, a sensor unit 604, a communication unit 606, and a power management unit 608.

The sensor unit 604 is communicatively coupled to the interface 602 using the communication unit 606. The sensor unit 604 may comprise one or more sensors including but not limited to inertial measurement unit (IMU) sensors, brake sensors, fuel sensors, occupancy sensors, steering sensors, pedal sensors, near-field communication (NFC) sensor, bluetooth low energy (BLE) sensor or ultra-wideband (UWB) sensor. The one or more parameters may include but are not limited to acceleration, angular velocity, wheel speed sensor, fuel level, user occupancy detection, vehicle static and moving conditions, wheel angle position, or accelerator pedal position. The one or more parameters may include but are not limited to short-range wireless signals such as near-field communication signals, bluetooth low energy signals or ultrawideband wireless signals. The sensor unit 604 automatically detects one or more parameters associated with the vehicle state to enable or disable run-lock mode. The interface 602 may include an infotainment system of the vehicle or an application installed on the third-party device to select one or more components of the vehicle. The interface 602 converts the inputs received from the sensor unit and an infotainment of the vehicle or an application installed on the mobile device into one or more signals using protocols. The protocols may include but are not limited to encoding, encryption, hashing, or obfuscation.

The interface 602 may include but is not limited to an encoder, an interleaver or a modulator to perform various operations on the inputs received from the sensor unit and an infotainment of the vehicle or an application installed on the mobile device before transmission. The various operations may include but are not limited to encoding, interleaving, or modulation. The interface 602 may comprise a processor and a memory (shown in FIG. 5) to execute and store information and instructions to carry out an overall operation of the vehicle. The memory stores a predefined list of one or more components. The predefined list of one or more components of the vehicle includes auxiliary components, primary components or a combination thereof. The auxiliary components include lighting components, wiper and washer components, door lock components, infotainment components, heating, ventilation, and air conditioning (HVAC) components, electric window components, parking assistance components, power take-off (PTO) components or a combination thereof. The power take-off components may include peripheral devices but are not limited to a cherry picker, a crane lift, or a power tool utilizing vehicle power during power take-off operation. The primary components include powertrain components, brake components, steering components, or a combination thereof.

The interface 602 may further include but is not limited to a tactile sensor, a light-emitting diode (LED), a loudspeaker or a combination thereof to receive feedback from the power management unit 608.

The communication unit 606 may support at least one of a wired communication protocol or wireless communication protocol. The wired communication protocol may include but is not limited to an ethernet (IEEE 802.3), a local interconnect network (LIN), a controller area network (CAN), a media-oriented system transport (MOST), or a flexray. The wireless communication protocol may include but is not limited to radio frequency (RF), infrared (IrDA), bluetooth, zigbee (and other variants of the IEEE 802.15 protocol), a wireless fidelity WiFI or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication.

Further, the power management unit 608 manages the vehicle's overall operation. The power management unit 608 is communicatively coupled to the interface 602 to receive the one or more signals. The power management unit 608 may be an integral part of the engine control unit (ECU). The power management unit 608 may comprise a processor and a memory to execute and store information and instructions.

The power management unit 608 comprises an authentication unit 610. The authentication unit 610 performs authentication on the one or more signals. The power management unit 608 only processes the one or more signals if the authentication unit 610 validates the one or more signals. The power management unit 608 sends back an error signal to the interface 602 if the authentication unit 610 fails to validate the one or more signals. The error signal may include an SMS, tactile feedback, a light-emitting diode (LED) blinking, an audio message, or a combination thereof.

The power management unit 608 processes the one or more signals after validation to control run-lock mode. The power management unit 608 may perform reverse operations (decoding, deinterleaving, or demodulation) on the one or more signals carried out during transmission. The power management unit 608 may include but is not limited to a decoder, an interleaver or a demodulator. The power management unit 608 processes the signals to control the run-lock mode including enabling or disabling the run-lock mode. The power management unit 608 processes the signals to decode the one or more selected components and associated activation or deactivation status to control the run-lock mode. The run-lock mode includes selective power management of one or more components of the vehicle.

For example, the interface 602 includes the sensor unit 604 to perform the functionality of the run-lock enabling or disabling. The interface 602 comprises at least one of an infotainment system of the vehicle or an application installed on a third-party device to perform the functionality of the one or more component selections.

The interface 602 receives inputs from the sensor unit 604 and an infotainment system of the vehicle or an application installed on a third-party device. For example, the interface 602 may receive the inputs from the brake sensor, occupancy sensor or a combination thereof to determine whether the vehicle is in the state to switch into the run-lock mode. Upon determination, the interface 602 converts the sensor inputs and component selection by the user from the infotainment system of the vehicle or an application installed on a third-party device into one or more signals. During component selection by the user, the infotainment system may display or indicate a level or value of power derived by the particular component of the vehicle, to assist the user in efficient component selection. The level or value of power derived by the particular component may be estimated using at least one sensor unit. Further, the interface 602 transmits the one or more signals to the power management unit 608. The power management unit 608 processes the one or more signals to control a run-lock mode. The power management unit 608 processes the signal to decode one or more selected components and associated activation or deactivation status to control the run-lock mode. This results in selective power management of the one or more components of the vehicle to conserve power.

In another example, the interface 602 includes the sensor unit 604 to perform the functionality of both the run-lock enabling or disabling and the one or more component selections. The sensor unit 604 determines the one or more parameters associated with the vehicle state. The interface 602 may receive the inputs from the brake sensor, occupancy sensor or a combination thereof to determine whether the vehicle is in the state to switch into the run-lock mode. The interface 602 additionally receives the inputs from a fuel sensor to determine the fuel level in the vehicle tank to selectively power one or more components of the vehicle. The interface 602 collects the inputs from the sensor unit 604 and converts the inputs into one or more signals. Further, the interface 602 transmits the one or more signals to the power management unit 608. The power management unit 608 processes the one or more signals to control a run-lock mode. The power management unit 608 processes the signal to decode one or more signals. The power management unit 608 fetches a table indicating a predefined threshold for one or more components of the vehicle stored in the memory. The power management unit 608 compares the decoded value of the one or more components with a predefined threshold. The power management unit 608 intelligently activates the run-lock mode and the one or more one or more selected components based on the comparison. The selective power management of the one or more components of the vehicle results in power conservation.

The selective power management of the one or more components of the vehicle is equivalent to priming the vehicle to activate or power the essential components during run-lock mode and power take-off operations. Further, activation status indicates the power of the particular component is "on", and deactivation status indicates the power of the particular component is "of". For example, if the user is working in the rear side of the vehicle, then the user requires only the essential components such as lightning components and the HVAC components to be powered. The remaining components can be turned off to conserve the power of the vehicle. The interface 602 provides flexibility to the user for selecting the desired components to be powered.

For example, the interface 602 may receive inputs from a smart vehicle key. The smart vehicle key may use a near-field communication sensor to securely unlock the vehicle. The vehicle automatically unlocks itself after receiving the inputs from the near-filed communication sensor to disable the run-lock mode.

FIG. 7 illustrates a method 700 for power management of a vehicle. The method comprising the following steps: (a) receiving (702) one or more signals; and (b) processing (704) the one or more signals to control a run-lock mode, wherein the run-lock mode includes selective power management of one or more components of the vehicle.

The interface transmits the one or more signals. The interface may include a vehicle key, a push button, an infotainment system of the vehicle, a smart vehicle key, or a combination thereof. The interface receives the inputs and converts the inputs into the one or more signals. The interface transmits the one or more signals to the power management unit.

The power management unit process the one or more signals to control the run-lock mode. The run-lock mode controlling further includes enabling or disabling the run-lock mode. The power management unit may include an authentication unit (not shown) to perform validation on the one or more signals before processing. The power management unit processes one or more signals to decode the one or more selected components and associated activation or deactivation status to control the run-lock mode. The one or more components are selected from a predefined list stored in the memory. The predefined list of one or more components includes auxiliary components, primary components or a combination thereof. The auxiliary components may include lighting components, wiper and washer components, door lock components, infotainment components, heating, ventilation, and air conditioning (HVAC) components, electric window components, parking assistance components, power take-off (PTO) components or a combination thereof. The primary components may include powertrain components, brake components, steering components, or a combination thereof. The activation status indicates the power of the particular component is "ON", and the deactivation status indicates the power of the particular component is "OFF".

The above-stated descriptions are merely example implementations of this application but are not intended to limit the protection scope of this application. A person with ordinary skills in the art may recognize substantially equivalent structures or substantially equivalent acts to achieve the same results in the same manner or a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and sub-combinations of the preceding elements and features.

The description is provided for clarification purposes and is not limiting. Words and phrases are to be accorded their ordinary, plain meaning unless indicated otherwise.

## Claims

1. A system for power management of a vehicle comprising:
an interface to transmit one or more signals;
a power management unit communicatively coupled to the interface to receive the one or more signals and process the signals to control a run-lock mode; wherein the run-lock mode includes selective power management of one or more components of the vehicle.

2. The system of claim 1, wherein the power management unit processes the signals to control the run-lock mode which includes enabling, pausing or disabling the run-lock mode.

3. The system of claim 1 or 2, wherein the power management unit processes the signal to decode one or more selected components and associated activation or deactivation status to control the run-lock mode.

4. The system of any preceding claim, wherein the interface is a human-machine interface to receive and convert one or more user inputs into the one or more signals.

5. The system of claim 1, wherein the interface is communicatively coupled to a sensor unit to determine one or more parameters associated with the vehicle state to generate one or more signals.

6. The system any preceding claim, wherein the power management unit is communicatively coupled to the interface via at least one of a wired or wireless communication protocol.

7. The system any preceding claim, wherein the power management unit includes an authentication unit to validate the one or more signals.

8. The system of claim 4, wherein the human-machine interface enables selection of the one or more components of the vehicle from a predefined list.

9. The system of claim 8, wherein the predefined list of one or more components of the vehicle includes auxiliary components, primary components or a combination thereof.

10. The system of claim 9, wherein the auxiliary components include lighting components, wiper and washer components, door lock components, infotainment components, heating, ventilation, and air conditioning (HVAC) components, electric window components, parking assistance components, power take-off (PTO) components or a combination thereof.

11. The system of claim 9 or 10, wherein the primary components include powertrain components, brake components, steering components, or a combination thereof.

12. A method for power management of a vehicle, the method comprising:
receiving one or more signals; and
processing the one or more signals to control a run-lock mode, wherein the run-lock mode includes selective power management of one or more components of the vehicle.

13. The method of claim 12, wherein controlling the run-lock mode includes enabling or disabling the run-lock mode.

14. The method of claim 12 or 13, wherein processing the one or more signals comprises decoding the one or more selected components and associated activation or deactivation status to control the run-lock mode.

15. The method according to any of claims 12-14, wherein the processing further comprises validating the one or more signals.
